**Europäisches Patentamt**

**European Patent Office**

**Office européen des brevets**

(19)

(11) Veröffentlichungsnummer : **0 102 326**
**B1**

(12) **EUROPÄISCHE PATENTSCHRIFT**

(45) Veröffentlichungstag der Patentschrift :
30.12.86

(51) Int. Cl.⁴ : **A 01 K 13/00**

(21) Anmeldenummer : **83810370.3**

(22) Anmeldetag : **18.08.83**

(54) **Auflage für die Hals- und/oder Kopfpartie von Huftieren.**

(30) Priorität : **18.08.82 CH 4933/82**

(43) Veröffentlichungstag der Anmeldung :
**07.03.84 Patentblatt 84/10**

(45) Bekanntmachung des Hinweises auf die Patenterteilung : **30.12.86 Patentblatt 86/52**

(84) Benannte Vertragsstaaten :
**AT BE CH DE FR GB IT LI LU NL SE**

(56) Entgegenhaltungen :
**CH-A- 413 225**
**US-A- 4 214 421**

(73) Patentinhaber : **TEMOVA ETABLISSEMENT**
**Landstrasse 140**
**FL-9494 Schaan (LI)**

(72) Erfinder : **Benckhuijsen, Gerrit Jan**
**Landstrasse 140**
**FL-9494 Schaan (LI)**

(74) Vertreter : **Büchel, Kurt F., Dr.**
**Patentanwalt Dr. Kurt F. Büchel Bergstrasse 297**
**FL-9495 Triesen (LI)**

## Beschreibung

Die Erfindung betrifft eine Auflage für die Hals- und/oder Kopfpartie von Huftieren, insbesondere Pferden, in einer dem Anlagebereich anatomisch angepassten Form und versehen mit Befestigungsmitteln, aus einer der Haut anliegenden Innenlage und einer Aussenlage, beide aus Textilmaterial, und zwischen denen eine biegsame, luftdurchlässige Einlage aus isolierendem Material angeordnet ist, z. B. nach der US-A-4, 214,421, die allerdings aus dichtgewebtem Polamid besteht und daher so gut wie nicht atmungsaktiv ist.

Es sind auch Schaumstoffpolsterungen für Pferdebeine bekannt geworden, die beim Rennen oder Springen gegen Schläge schützen sollen und beidseitig von einer elastischen Gewebebinde abgedeckt sind. Solche elastischen Binden wären für die Hals- und/oder Kopfpartie der Tiere nicht geeignet, ganz abgesehen davon, dass sie keinerlei therapeutische Wirkung hätten (CH-PS-413 225).

Zur Linderung von Erkältungskrankheiten bei Pferden gibt es ausser Wärmeschutzdecken auch Halswickel oder Halsbandagen, welche den Tierleib vor witterungs- oder verdunstungsbedingter Kühle schützen sollen. Die bekannten Produkte sind zumeist aus einer wärmekonservierenden Einlage aus Wollmaterial und c ʻem Ueberzug aus Leinen oder Plastik aufgebauɩ. Derart vermögen die bekannten Wickel und Bandagen zwar äussere Kälteeinflüsse zu einem gewissen Grad abzuhalten, jedoch beschränkt sich ihre Wirkung ausschliesslich auf diese Abschirmfunktion, da sie selbst keine wärmeproduzierenden Eigenschaften besitzen. Ferner ist von grossem Nachteil, dass die Einlagen infolge ungenügender bis fehlender Abführung der Verdunstungsfeuchtigkeit zur Schweissfeuchte neigen und dadurch Kühlherde darstellen.

Für viele Erkrankungen des Halsbereichs, z. B. Katarrhe der oberen Luftwege, Entzündungen in der Kehle, ist, ggf. in Verbindung mit medikamentiver Behandlung, eine gezielte Wärmebehandlung des Halsbereichs in Umgebung des Krankheitsherdes wünschenswert. Da die bekannten Wickel und Bandagen weder zu diesem Zweck konzipiert sind noch therapeutische Eigenschaften aufweisen, hat sich die Erfindung zur Aufgabe gestellt, eine Auflage der obengenannten Art zu schaffen, die ausser eine Abschirmung gegen äussere Kühleinflüsse zusätzlich wärmeerzeugende Eigenschaften besitzt, wobei weder Abschirmung noch Wärmeerzeugung durch Verdunstungseinflüsse beeinträchtigt sind.

Diese Aufgaben werden durch eine Auflage der eingangs genannten Art gelöst, wenn sie die im Kennzeichen des Patentanspruches 1 genannten Merkmale aufweist.

Die Auflage kann entweder nur den Halsbereich, oder nur den Kehlbereich abdecken, oder aber einstückig zur Abdeckung beider Bereiche ausgebildet sein. Soferne sie wenigstens den Halsbereich abdeckt, hat es sich als zweckmässig erwiesen, wenn der dem Rücken zugekehrte Stirnrand der beiden Wandungen mit Befestigungsmitteln zur Verbindung mit einer allenfalls vorgesehenen Rückendecke versehen ist. Soferne die Auflage im Kehl- und/oder Stirnbereich angeordnet ist, weist sie vorzugsweise Ausnehmungen für die Ohren und/oder Augen auf. Für Fälle, in denen aus therapeutischen Zwecken die Beweglichkeit des Kopfes und/oder Halses eingeschränkt werden soll, können in die Auflage annähernd parallel zur Wirbelsäule verlaufende Versteifungsstäbchen eingearbeitet sein.

Die Erfindung ist im folgenden für einige Ausführungsbeispiele anhand der beiliegenden Zeichnungen näher erläutert. Es zeigen :

Figur 1 in schematischer Darstellung zwei Ausführungsformen des Kragens in Ausbildung zur Anlage am Kehlbereich und am langgestreckten Halsteil ;

Figur 2 eine perspektivische Ansicht des Kehlkragens von Fig. 1 in z. T. schematischer Darstellung ;

Figur 3 einen Querschnitt durch den Kehlkragen von Fig. 2 ;

Figur 4 in vereinfachter Darstellung eine Draufsicht auf die Innenseite des Halskragens von Fig. 1 in ausgebreitetem Zustand ;

Figur 5 einen Schnitt entlang der Linie I-I von Fig. 4 in schematischer Darstellung ;

Figur 6 die erfindungsgemässe Auflage für Hals, Kehlbereich und Stirn, in schematischer Darstellung.

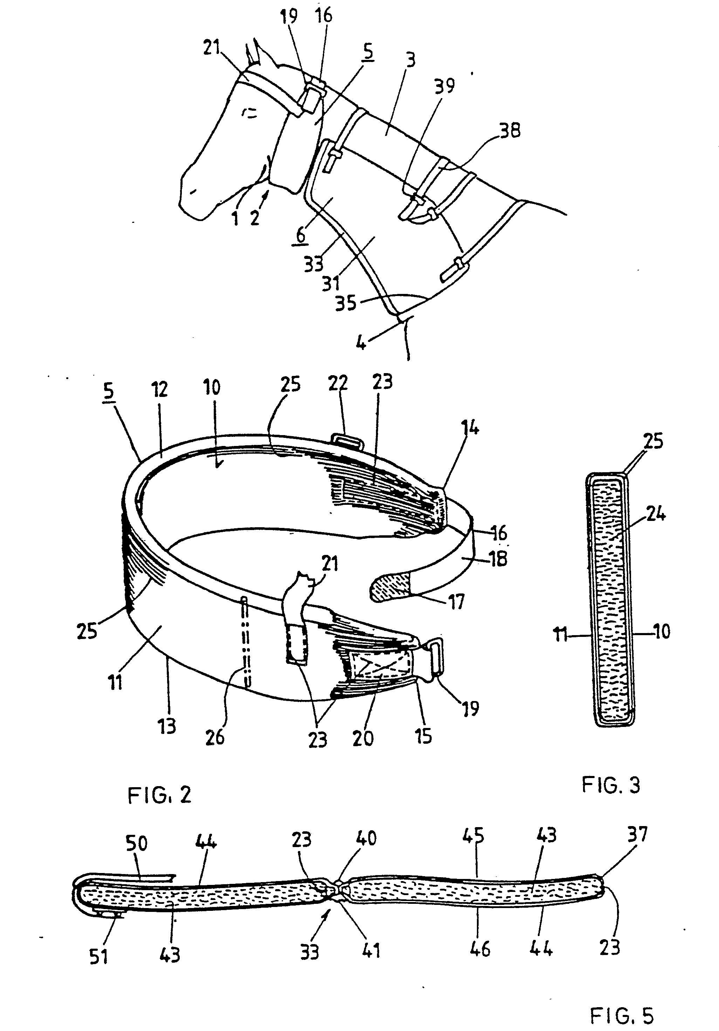

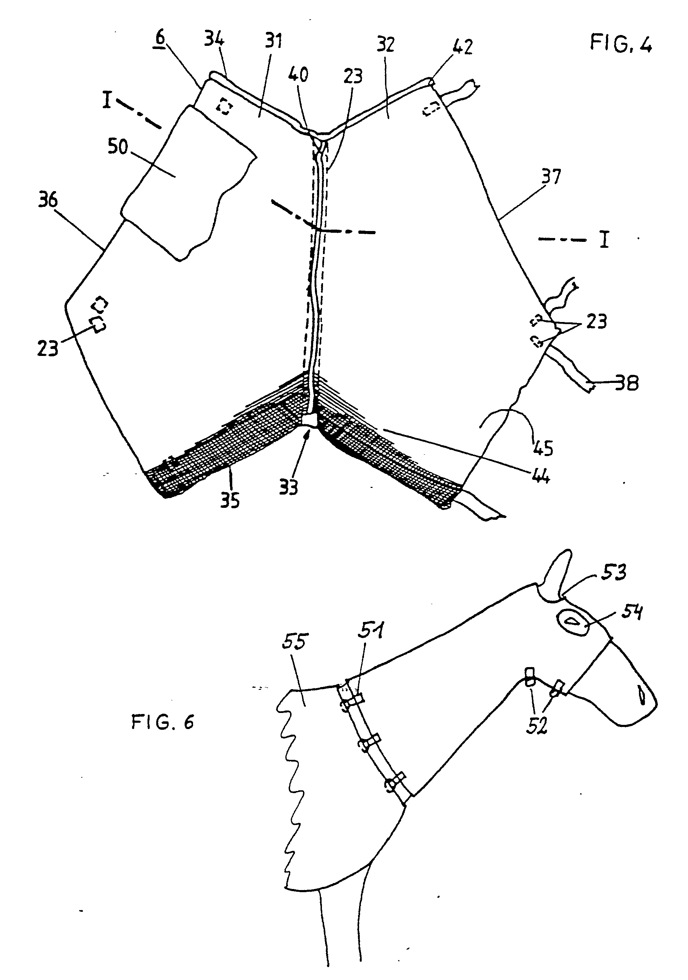

Bezugnehmend auf Fig. 1 erstreckt sich der Anwendungsbereich des Kragens von der Backe 1 über den Kehlbereich 2, dem langgestreckten Halsteil 3 bis zur sogenannten Bugspitze 4. Obwohl zur Abdeckung der gesamten Halspartie 1 bis 4 ein gemeinsamer Kragen möglich ist z. B. für eine allgemeine Wärmebehandlung, genügt bei örtlichen Krankheitsherden meist eine individuelle Behandlung in deren Umgebung. Dementsprechend zeigt Fig. 1 als Ausführungsformen je einen Kehlkragen 5 und einen Halskragen 6, die dem Kehlbereich 2 bzw. Halsteil 3 anatomisch angepasst sind. Die Kragenabmessungen können derart gewählt werden, sodass sich mit beiden Kragen 5, 6 zusammen falls erforderlich die gesamte Halspartie 1 bis 4 abdecken lässt wie in Fig. 1 veranschaulicht ist. Die Kragen 5, 6 sind vorgesehen zur Umfassung der unteren Halsrundung und weisen daher vorzugsweise axialsymmetrischen Zuschnitt auf (Fig. 2, 4) zwecks gleicher links- und rechtsseitiger Abdeckung. Dagegen ist die Weite der freigelassenen Lücke beidseits der Nackenlinie beliebig reduzierbar bis zur Spaltlosigkeit oder Ueberlappung.

Bezugnehmend auf Fig. 2 besitzt der streifenförmige Kehlkragen 5 mit Querschnittabmessungen von z. B. 12 × 2-2,5 cm eine Innenwand 10, Aussenwand 11, einen oberen und unteren Seitenrand 12, 13, sowie abgeschrägte Enden 14, 15. Als Befestigungsmittel dient ein um den Nacken zu legendes Band 16 aus Kunststoff, das der Kragenaussenseite 11 an einem Kragenende 14 angepasst ist. Die Aussenseite des Bandes 16 ist an der Spitze mit einem Klebebelag 17 und daran angrenzend einem hierzu komplementären Haftbelag 18 beschichtet. Das andere Kragenende 15 trägt einen Festzieh- und Führungsring 19 und einen mit einem Haftbelag beschichteten Haftstreifen 20, sodass das angezogene Band 16 entweder am Haftstreifen 20 oder am eigenen Haftbelag 18 festklebbar ist. Als weiteres Befestigungsmittel kann falls erforderlich ein Stirnband 21 vorgesehen sein, das wie dargestellt in Nähe der Kragenenden 14, 15 dieselben verbindet. Das Stirnband 21 ist ebenfalls mittels eines Rings 22 und selbstklebenden Haft- und Trennverschluss fixierbar. Da bei der Herstellung des Kragens 5 sowohl Näh- als auch Schweissverfahren angewandt werden können, stellen die gestrichelt angedeuteten Nähte 23 zur Anbringung der Befestigungsmittel 16, 19 bis 22 am Kragen 5 sowohl Vernähungsnähte als auch Schweissnähte dar.

Wie aus dem Querschnitt von Fig. 3 hervorgeht, enthält der Kehlkragen 5 innen eine Einlage 24 und aussen eine gemeinsame Umhüllung aus einem bestimmten Textilmaterial 25, das die innere und äussere Kragenwandung 10, 11 bildet. Die für den Erfindungszweck wesentliche stoffliche Beschaffenheit des Textilmaterials 25 und der Einlage 24 wird weiter unten erläutert.

Der Kehlkragen 5 kann in Verbindung mit der noch zu erläuternden Wärmebehandlungsfunktion eine Stützfunktion ausüben, die den Bewegungsspielraum des Kopfes einschränkt. Sollte eine derartige Stützfunktion für bestimmte Erkrankungen besonders erwünscht sein, so besteht die Möglichkeit, den Kehlkragen 5 durch Versteifungsstäbchen 26 zu verstärken. Die Stäbchen 26, von denen in Fig. 2 lediglich eines angedeutet ist, verlaufen senkrecht zwischen den Seitenrändern 12, 13 durch die Einlage 24 und können beim Austritt mit ihr z. B. vernäht oder verschweisst sein.

Bezugnehmend auf Fig. 4, 5 besteht der Halskragen 6 für den langestreckten Halsteil 3 aus zwei deckungsgleichen Hälften 31, 32, die um die gelenkige Mittelkante 33 nach einwärts zusammenklappbar sind. Zur Gewährleistung eines passgerechten Sitzes im gesamten Anlagebereich weist die Mittelkante 33 eine bogenförmige Wölbung auf (Fig. 1). Demselben Zweck dient die jeweils nach einwärts gewinkelte Form des Ober- und Unterrandes 34, 35 sowie die Dreiecksform der Seitenränder 36, 37. Als Befestigungsmittel sind an der einen Kragenhälfte 32 aussenseitig in Randnähe angesetzte Bänder 38 vorgesehen, denen auf der anderen Kragenhälfte 31 aussenseitig angebrachte Schnallen 39 (Fig. 1) zugeordnet sind. Die Mittelkante 33 und der Oberrand 34 sind zweckmässig mit Schutzstreifen 40, 41 bzw. 42 abgedeckt. Die in Fig. 4 gestrichelt angedeuteten Nähte 23 können aus erwähnten Gründen sowohl Versäumungs- als auch Schweissnähte darstellen.

Aus dem inneren Aufbau von Fig. 5 geht hervor, dass der Halskragen 6 eine Einlage 43 aufweist, die im Bereich der Mittelkante 33 in zwei Teile zerlegt ist. Die Einlage 43 ist von einer gemeinsamen Umhüllung aus einem bestimmten Textilmaterial 44 umgeben, das damit sowohl die Innenwand 45 als auch die Aussenwand 46 bildet. Im Ueberbrückungsbereich der Mittelkante 33 sind die innere und äussere Textillage miteinander vernäht und beidseits hiervon längs parallelen Nähten 23 mit der Einlage 43 vernäht bzw. verschweisst. Ferner kann das Textil 44 längs den Rändern 34 bis 37 mit der Einlage 43 versäumt bzw. verschweisst sein, wie in Fig. 5 für den Seitenrand 37 angedeutet ist.

Wie bereits die angelegten Kragen 5, 6 (Fig. 1) verdeutlichen, ergeben sie den herkömmlichen Schutz gegen äussere Temperatureinflüsse, da ja wie erwähnt die Kragen 5, 6 bis zur Geschlossenheit ausgebildet sein können. Erfindungswesentlich ist, dass die Kragen 5, 6 ausserdem eine zusätzliche Ausbildung als therapeutisches Behandlungsmittel für die genannten Erkrankungen besitzen, womit ausser einer Schutzfunktion eine Heilfunktion der Kragen tritt. Das Zustandekommen dieses Heileffekts durch die Kragen 5, 6 hängt wesentlich ab von der stofflichen und strukturellen Beschaffenheit der Textilien 25, 44 und der Einlage 24, 43.

Werden die vorstehend beschriebenen Kragen 5, 6 mit einem derartigen Textil 25, 44 bestimmter Struktur ausgestattet und einem an z. B. Katarrh leidendem Pferd angelegt, so klingen die Beschwerden überraschenderweise in unüblich kürzerer Zeit ab. Dieser Heilungsprozess ist offenbar nicht allein der Wärmeentwicklung in der Umgebung des Entzündungsherdes sowie der ggf. gleichzeitigen medikamentiven Behandlung zuzuschreiben. Es muss vielmehr angenommen werden, dass die elektrostatischen Ladungen auf der Haut selbst, sowie die hohen elektrostatischen Spannungen den Heilungsprozess fördern. Möglicherweise bewirken derartige Textilien bei Pferden neuartige, bisher nicht bekannte Heileffekte. Es wurde auch ermittelt, dass das Textil 25, 44 allein den Heileffekt nicht ausmacht, sondern nur in Anwesenheit einer geeigneten Einlage 24, 43 eintritt und ferner besonders wirksam ist, wenn nicht nur die die der Haut anliegenden Innenwände 10, 45, sondern auch die Aussenwände 11, 46 aus diesem Textil bestehen.

Bei den genannten Textilien 25, 44 handelt es sich um Kunstfasergestricke, für die sich paraffinierte Polyvinylchloridfasern als geeignet erwiesen haben, wobei den Polyvinylchloridfasern zur Erhöhung der Reissfestigkeit ein Anteil von 10-15 % Acrylfasern beigefügt sein kann. Unter bestimmten Bedingungen können gegebenenfalls auch andere zur Erzeugung von Reibungselektrizität geeignete synthetische Fasern zur Herstellung der gestrickten Textilien 25, 44 angewandt werden. Für den Heileffekt ist es wesentlich, dass die Ladung auf der Haut und die entstehende elektrostatische Spannung einen möglichst hohen und dauernd aufrecht erhaltenen Wert besitzt. Das erforderliche Textil sollte infolgedessen einerseits möglichst dicht sein — zwecks Erzeugung hoher elektrostatischer Werte — und andererseits genügende Maschenweite besitzen zwecks leichtem Verdunsten der Hautfeuchtigkeit, welche infolge der Wärmeentwicklung entstehen kann und die Ladung beeinträchtigen würde. Es wurde ermittelt, dass diese Erfordnisse durch Feinrippgestricke und Interlockgestricke der nachfolgenden Kenndaten am besten erfüllt werden. Das Feinrippgestrick wurde aus der vorstehend angegebenen Kunstfaser mit 2,5 bis 4 Denier auf einer Rundstrickmaschine bei Verarbeitung mit 10 Nadeln auf 2 cm erzeugt. Die Stichzahl betrug 21 Stiche/2 cm Länge und 15 Stiche/2 cm Breite, die Maschenzahl 78/cm$^2$ und das Gewicht 315 g/m$^3$. Allgemein wurden als wirksamste Stichzahlenbereiche 18-25 bzw. 12-20 Stiche pro 2 cm Länge bzw. Breite und 310-325 g/m$^2$ als bevorzugter Gewichtsbereich für das Feinrippgestrick ermittelt. Zu seiner Herstellung kommen auch andere Rundstrickmaschinen oder Flachstrickmaschinen in Frage. Bei einem auf Interlockbasis und einer Verarbeitung mit 16 Nadeln auf 2 cm erzeugten Interlockgestrick betragen die für den Anwendungszweck wirksamsten Kenndaten : Garngewicht 40 000-50 000 m Länge/kg, Stichzahl 20-30 Stiche/2 cm in Länge und Breite, Flächengewicht 150-300 g/m$^2$. Typisch sind z. B. für ein 40 000 m/kg Garn : 26 (25) Stiche auf 2 cm Länge (Breite) und 260 g/m$^2$ Gewicht ; für ein 50 000 m/kg Garn : 25 (24) Stiche auf 2 cm Länge (Breite) und 200 g/m$^2$ Gewicht. In Fig. 2 ist das Textil 25 beispielsweise liniert als Feinrippgestrick, in Fig. 4 schraffiert als Interlockgestrick schematisch dargestellt worden.

Wie vorstehend angegeben, sind ausser den beschriebenen Textilien 25, 44 ebenso Einlagen 24, 43 bestimmter Beschaffenheit erforderlich, damit die Kragen 5, 6 therapeutische Wirksamkeit besitzen. Die Hauptforderung besteht darin, dass die Einlagen 24, 43 ungehindert Luft passieren lassen. Diese Luftdurchlässigkeit ist notwendig, damit von der Haut verdunstete feuchte Luft die Kragen 5, 6 von der Innenseite 10, 45 zur Aussenseite 11, 46 durchdringen kann. Ferner soll die Einlage 24, 43 eine elastische Formfestigkeit besitzen, die einen allseitigen Anpressdruck des Textils 25, 44 gegen die Haut gewährleistet. Diese Forderungen werden allgemein mit einem Schaumkörper der Gruppe Polyurethan-Schaum als Einlage 24, 43 erreicht, der infolge offener Poren luftdurchlässig ist, die erwünschte elastische Formfestigkeit aufweist und Feuchtigkeit durchlässt. Der Schaumkörper der praktisch erprobten Kragen 5, 6 besitzt z. B. 2 cm Dicke und ein Gewicht von 40 kg/m$^3$.

Selbstverständlich ist auch eine Luftdurchlässigkeit der Aussenwand 11, 46 erforderlich. Wie hierbei die praktische Erprobung erwiesen hat, steigt die therapeutische Wirksamkeit der Kragen 5, 6, wenn anstelle eines beliebigen luftdurchlässigen Materials, z. B. Leinen, ebenfalls das Textil 25, 44 der vorstehend angegebenen Beschaffenheit die Aussenwände 11, 46 bildet. Vorteilhaft ist ferner, wenn zwei gegenseitig bereichsweise verschiebliche Lagen des Textils die Schaumkörpereinlagen allseits umgeben, wie beispielsweise in Fig. 3 für den Halskragen 5 angedeutet ist. Die hierbei auftretenden resultierenden elektrostatischen Spannungen gegen die Haut übersteigen 30 kV.

Die Herstellung der Kragen 5, 6 kann in folgenden Schritten erfolgen : ein- oder doppellagiger Textilhüllen auf der Lockmaschine, Einfügen des Schaumkörpers durch eine offengelassene Hüllenseite und Zusammennähen unter Aufnähen der Befestigungsmittel 16 bis 22, 38, 39 auf einer Ledernähmaschine längs den Ein- und Aufnähnähten 23.

Eine wesentliche Reduzierung des Nähaufwandes ist möglich geworden durch die überraschende Feststellung, dass ein Textilmaterial der oben beschriebenen Art auch mit dem aus der Lederindustrie bekannten Verfahren der Hochfrequenz-Verschweissung verarbeitet werden kann. Dabei werden anstelle des Nähvorgangs die jeweils zu verbindenden Materialien zwischen keilförmigen Metall-Elektroden zusammengepresst und durch Zuführung entsprechender Hochfrequenzenergie miteinander verschweisst. Eine Voraussetzung hierfür ist aber, dass für die Herstellung der Kragen 5, 6 nicht nur das so verschweissbare Textilmaterial verwendet wird, sondern auch ein geeigneter Schaum, der einerseits die oben beschriebenen strukturellen Eigenschaften besitzt, andereseits aber auch mit Hochfrequenz verschweissbar sein muss. Dies ist für die angegebene Einlage 5, 6 aus Polyurethan-Schaum bisher mit Schwierigkeiten verbunden, weshalb hierfür ein Polyvinylchlorid-Schaum verwendet wird, der unter dem eingetragenen Warenzeichen TROVIPOR bekannt ist und die erforderliche Formbeständigkeit, sowie offene Poren und ausreichende Luftdurchlässigkeit besitzt. Dieser TROVIPOR-Schaum kann mittels Hochfrequenz verschweisst und dementsprechend mit dem oben beschriebenen Textilmaterial zusammen verarbeitet werden. Hierbei hat sich ein Frequenzbereich von etwa 20 MHz als geeignet erwiesen, wie er auch in den bekannten Hochfrequenz-Schweisspressen der Lederindustrie angewendet wird. Bei der Herstellung der beschriebenen Kragen 5, 6 gemäss diesem Hochfrequenz-Schweissverfahren wird jeweils die ein- oder zweilagige Textilschicht der Innenseite auf die untere Elektrode der betreffenden Schweissmaschine gelegt, hierauf die Schaumstoffplatte mit einer Gesamtdicke von beispielsweise 10-20 mm und hierauf die ein- oder zweilagige Textilbahn der Aussenseite aufgebracht, wobei natürlich diese drei Bestandteile bereits den erforderlichen Zuschnitt besitzen. Längs der zu verschweissenden Nähte 23 weist mindestens die eine Elektrode, beispielsweise die obere, entsprechende Rippen mit keilförmigen Kanten auf, zwischen denen dann beim Zusammenpressen der Elektroden die sämtlichen Bestandteile des Kragens aufeinander gedrückt werden. Durch kurzzeitige Zuführung der Hochfrequenzenergie schmelzen längs der zusammengedrückten Linien die Materialien des Textils und der Einlage und werden längs dieser Schweissnähte 23 unlöslich miteinander verbunden. Mit dem Hochfrequenz-Schweissverfahren können auch die Befestigungsmittel 16 bis 23, 38, 39 auf den Aussenseiten 11, 46 befestigt werden, wobei dieselben nicht unbedingt aus einem zur Hochfrequenz-Verschweissung geeignetem Material bestehen müssen, sondern in einem getrennten Arbeitsgang auf eine schweissfähige Unterlage genäht werden können, woraufhin diese Unterlage mit dem Kragen 5, 6 aussenseitig verschweisst wird, was bei geeigneter Anordnung auch in einem Arbeitsgang zusammen mit der Verschweissung der übrigen Kragenbestandteile erfolgen kann. Bestehen die Bänder 38 und Schutzstreifen 41, 42 des Halskragens 6 z. B. aus zähem Polyvinylchlorid-Material, etwa aus dem handelsüblichen Kunstleder SKAI (eingetragenes Warenzeichen), so können dieselben direkt dem Kragen 6 aufgeschweisst werden.

Bei der Behandlung von bestimmten Erkrankungen, z. B. Geschwulsten, hat es sich als vorteilhaft erwiesen, unmittelbar vor Beginn der therapeutischen elektrostatischen Wärmebehandlung einen Kühlumschlag auf die erkrankten Stellen aufzubringen. Um eine solche vorausgehende Kältebehandlung zu erleichtern, kann wie z. B. für den Halskragen 6 in Fig. 4, 5 angedeutet ist, eine Tasche 50 vorgesehen werden, die sich längs der Innenseite 45 des Halskragens 6 erstreckt. Die Tasche 50 besteht beispielsweise aus einer dünnen Plastikfolie, die um den Seitenrand 36 umgeschlagen und auf der Aussenseite 46 mittels der Druckknöpfe 51 befestigt ist, sich also leicht abnehmen lässt. In die Tasche 50 kann sodann ein biegsames, allseits geschlossenes Kissen eingeschoben werden, das beispielsweise mit kaltem Wasser, Eis oder einer anderen Kühlfüssigkeit gefüllt ist. Nach der meist kurzzeitigen Kältebehandlung wird die Tasche 50 angeknöpft und mit dem Kissen vom Tierleib abgezogen, worauf unmittelbar die elektrostatische Wärmebehandlung beginnt, welches Vorgehen sich als besonders wirksam gezeigt hat. Selbstverständlich ist diese Kältebehandlung auch mit einem Kehlragen 5 durchführbar.

Gemäß Fig. 6 sind Befestigungsmittel 51 zur Verbindung mit einer Rückendecke 55, Befestigungsmittel 52 zur Verbindung der beiden Wandungen miteinander im Kehlbereich, und Öffnungen 53 für die Ohren, bzw. 54 für die Augen vorgeschen.

## Patentansprüche

1. Auflage für die Hals- und/oder Kopfpartie von Huftieren, insbesondere Pferden, in einer dem Anlagebereich anatomisch angepassten Form und versehen mit Befestigungsmitteln, aus einer der Haut anliegenden Innenlage (10, 45) und einer Aussenlage (11, 46), beide aus Textilmaterial, zwischen welchen Lagen eine biegsame, luftdurchlässige Einlage (24, 43) aus isolierendem Material angeordnet ist, dadurch gekennzeichnet, dass das Textilmaterial gestrickt oder gewirkt, luftdurchlässig, für die Innenlage und die Außenlage das gleiche ist, zwischen 50 und 125 Maschen pro cm$^2$ aufweist und aus unhygroskopischen, zur Erzeugung von Reibungselektrizität geeigneten Kunststoffasern besteht, von denen mindestens 85 %, vorzugsweise paraffinierte, Polyvinylchloridfasern sind, und dass die Einlage (24, 43) aus porösem Schaumstoff besteht.

2. Auflage nach Anspruch 1, dadurch gekennzeichnet, dass wenigstens die Innenwandung (10, 45) aus zwei Lagen des Textilmaterials besteht.

3. Auflage nach einem der vorhergehenden Ansprüche, dadurch gekennzeichnet, dass zwischen ihren Seitenrändern (37, 38) im angelegten Zustand ein Spalt besteht.

4. Auflage nach einem der vorhergehenden Ansprüche, dadurch gekennzeichnet, dass die Seitenränder (37, 38) der beiden Wandungen mit über den Nacken greifenden Befestigungsmitteln (16, 19 ; 38, 39) versehen sind.

5. Auflage nach einem der vorhergehenden Ansprüche, dadurch gekennzeichnet, dass der dem Rücken zugekehrte Stirnrand der beiden Wandungen mit Befestigungsmitteln (51) zur Verbindung mit einer Rückendecke versehen ist.

6. Auflage nach einem der vorhergehenden Ansprüche, dadurch gekennzeichnet, dass sie im Kehl- und/oder Stirnbereich Ausnehmungen (53, 54) für die Ohren und/oder Augen aufweist.

7. Auflage nach einem der vorhergehenden Ansprüche, dadurch gekennzeichnet, dass annähernd parallel zur Wirbelsäule verlaufende Versteifungsstäbchen (26) eingearbeitet sind.

8. Auflage nach einem der vorhergehenden Ansprüche, dadurch gekennzeichnet, dass sie als Halskragen (6) zur Umhüllung des langgestreckten Halsteils (3) ausgebildet ist und zwei deckungsgleiche Hälften (31, 32) aufweist, die beidseits einer nach einwärts gewölbten Mittelkante (33) umklappbar sind, mit jeweils einem nach einwärts gewinkelten Ober- und Unterrand (34, 35) und dreieckförmigen Seitenrändern (36, 37), sowie mit einer entlang der Mittelkante (33) zweigeteilten Einlage (43).

9. Auflage nach einem der vorhergehenden Ansprüche, gekennzeichnet durch eine abnehmbare Tasche (50) auf der der Haut anliegenden Innenwand (10, 45) zur Aufnahme eines Kissens mit Kühlmedium.

## Claims

1. Covering for the neck part and/or head part of hoofed animals, in particular horses, in a form which is anatomically adapted to the area over which it is laid and provided with fastening means, and comprising an inner layer (10, 45) adjacent to the skin and an outer layer (11, 46), both of textile material, between which layers a flexible, air-permeable insert (24, 43) of insulating material is arranged, characterized in that the textile material is knitted or woven, is air-permeable and is the same for the inner layer and the outer layer, has between 50 and 125 meshes per cm² and consists of non-hygroscopic plastic fibres which are suitable for generating frictional electricity and at least 85 % of which are polyvinyl chloride fibres, which are preferably paraffinated, and that the insert (24, 43) consists of porous foam.

2. Covering according to claim 1, characterized in that at least the inner wall (10, 45) consists of two layers of textile material.

3. Covering according to one of the preceding claims, characterized in that there is a gap between its lateral edges (37, 38) when the covering is in position.

4. Covering according to one of the preceding claims, characterized in that the lateral edges (37, 38) of the two walls are provided with fastening means (16, 19 ; 38, 39) which pass over the neck.

5. Covering according to one of the preceding claims, characterized in that the end edge of the two walls which faces the back is provided with fastening means (51) for connection to a blanket.

6. Covering according to one of the preceding claims, characterized in that it possesses, in the throat region and/or forehead region, openings (53, 54) for the ears and/or eyes.

7. Covering according to one of the preceding claims, characterized in that stiffening rods (26) running approximately parallel to the vertebral column are incorporated.

8. Covering according to one of the preceding claims, characterized in that it is in the form of a collar (6) for surrounding the extended neck part (3) and has two identically shaped halves (31, 32) which can be folded on either side of a central edge (33) which is curved inwards, each having an upper edge and lower edge (34, 35) angled inwards and triangular lateral edges (36, 37), and with an insert (43) which is divided into two along the central edge (33).

9. Covering according to one of the preceding claims, characterized by a removable pocket (50) on the inner wall (10, 45) adjacent to the skin for holding a cushion containing a cooling medium.

**Revendications**

1. Minerve pour la région du cou et/ou de la tête d'animaux ongulés, en particulier des chevaux, ayant une forme anatomiquement adaptée à la zone d'application et munie de moyens de fixation, cette minerve comprenant une paroi interne (10, 45) appliquée sur la peau et une paroi externe (11, 46), toutes deux en matière textile et entre lesquelles est insérée une garniture souple (24, 43) de matériau isolant perméable à l'air, caractérisée en ce que la matière textile, tricotée ou maillée, perméable à l'air, est la même pour la paroi interne et pour la paroi externe, présente entre 50 et 125 mailles par centimètre carré, et est composée de fibres de matière plastique non hygroscopiques et appropriées pour engendrer de la tribo-électricité, dont au moins 85 % sont des fibres de chlorure de polyvinyle, de préférence paraffinées, et en ce que la garniture (24, 43) est constituée de mousse poreuse.

2. Minerve selon la revendication 1, caractérisée par le fait qu'au moins la paroi interne (10, 45) se compose de deux couches de la matière textile.

3. Minerve selon l'une des revendications précédentes, caractérisée par le fait qu'un intervalle est réservé, à l'état appliqué, entre ses bords latéraux (37, 38).

4. Minerve selon l'une des revendications précédentes, caractérisée par le fait que les bords latéraux (37, 38) des deux parois sont dotés de moyens de fixation (16, 19 ; 38, 39) emprisonnant l'encolure par en dessus.

5. Minerve selon l'une des revendications précédentes, caractérisée par le fait que le bord extrême des deux parois orienté vers le dos est muni de moyens de fixation (51) en vue de la liaison avec une couverture dorsale.

6. Minerve selon l'une des revendications précédentes, caractérisée par le fait qu'elle comporte, dans la région de la gorge et/ou du front, des évidements (53, 54) pour les oreilles et/ou les yeux.

7. Minerve selon l'une des revendications précédentes, caractérisée par le fait qu'elle renferme des barrettes de rigidification (26) s'étendant à peu près parallèlement à la colonne vertébrale.

8. Minerve selon l'une des revendications précédentes, caractérisée par le fait qu'elle est réalisée sous la forme d'un cache-col (6) pour envelopper la partie allongée du cou (3) et comporte deux moitiés (31, 32) de configurations identiques, qui peuvent être rabattues de part et d'autre d'une arête médiane (33) bombée vers l'intérieur, comprenant des bords supérieur et inférieur (34, 35) coudés respectivement vers l'intérieur, des bords latéraux triangulaires (36, 37), ainsi qu'une garniture insérée (43) subdivisée en deux parties le long de l'arête médiane (33).

9. Minerve selon l'une des revendications précédentes, caractérisée par une poche amovible (50) située sur la paroi interne (10, 45) appliquée contre la peau, en vue de recevoir un coussin de fluide de refroidissement.

FIG. 2

FIG. 3

FIG. 5

FIG. 4

FIG. 6